# EUROPÄISCHE PATENTANMELDUNG

(11) **EP 1 930 115 A1**
(43) Veröffentlichungstag der Anmeldung: **11.06.2008**
(21) Anmeldenummer: 06024068.6
(22) Anmeldetag: 20.11.2006
(51) Int. Cl.: B23K 35/02, B23K 35/30, B23K 35/40

(54) **Draht, Verwendung eines Drahts und ein Verfahren zum Schweissen**

(71) Anmelder: SIEMENS AKTIENGESELLSCHAFT, 80333 München (DE)
(72) Erfinder: Ott, Michael, Dr., 45470 Mühlheim a. d. Ruhr (DE)

(57) **Zusammenfassung**

Beim Schweißverfahren wird vorzugsweise ein artgleiches Material für das Bauteil verwendet, das geschweißt werden soll. Bei spröden Bauteilen (1, 120, 130, 155) lässt sich allerdings ein oft zu verwendeter Schweißdraht (1) schwierig herstellen.

Der erfindungsgemäße Draht (1) besteht aus einer metallischen Hülle (7), die ein plastisch verformbares Material darstellt und im Inneren das spröde, artgleiche Material für das Bauteil (1, 120, 130, 155) aufweist.

## Beschreibung

Die Erfindung betrifft einen Draht, der eine Hülle aus einem metallischen Material aufweist, die Verwendung des Drahts und ein Verfahren zum Schweißen.

Viele Bauteile müssen bei der Herstellung oder zwecks Reparatur geschweißt werden. Dies ist zum Beispiel bei Turbinenschaufeln oder Bauteilen für Hochtemperaturanwendungen der Fall, die aus Superlegierungen bestehen. Die Superlegierungen sind gehärtet durch die γ'-Phase und sind bei niedrigen Temperaturen im Vergleich zu den hohen Einsatztemperaturen sehr spröde und lassen sich durch Ziehen oder heißen Rollen nur mit hohem Aufwand bearbeiten. Daher wird beim Schweißen, bei dem Schweißdrähte verwendet werden, aus einem massiven Block einer γ'-gehärteten Superlegierung mittels EDM ein Draht herausgeschnitten. Dies ist kosten- und zeitintensiv.

Es ist daher Aufgabe der Erfindung dieses Problem zu überwinden.

Die Aufgabe wird gelöst durch einen hohlen metallischen Draht mit einer metallischen Füllung, durch die Verwendung des Drahts und ein Verfahren zum Schweißen.

In den Unteransprüchen sind weitere vorteilhafte Maßnahmen aufgelistet, die sich beliebig in vorteilhafter Art und Weise miteinander verbinden lassen.

Es zeigen
- Figur 1: den Querschnitt eines Drahts mit metallischer Hülle im unbearbeiteten oder bearbeiteten Zustand,
- Figur 2: die Verwendung eines solchen Drahts beim Schweißverfahren,
- Figur 3: eine Gasturbine,
- Figur 4: perspektivisch eine Turbinenschaufel,
- Figur 5: perspektivisch eine Brennkammer und
- Figur 6: eine Liste von Superlegierungen

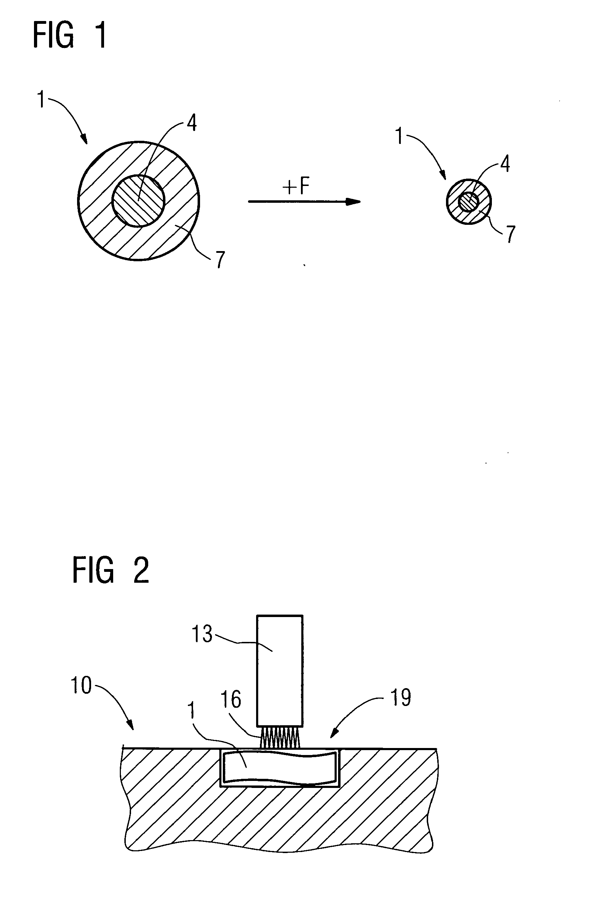

In Figur 1 ist der metallische Draht 1 im Querschnitt dargestellt.

Der Querschnitt des Drahts 1, der Hülle 7 und des Kerns 4 ist vorzugsweise jeweils rund.
Der Querschnitt kann auch eckig (quadratisch, rechteckig) sein oder kann eine andere Form aufweisen.

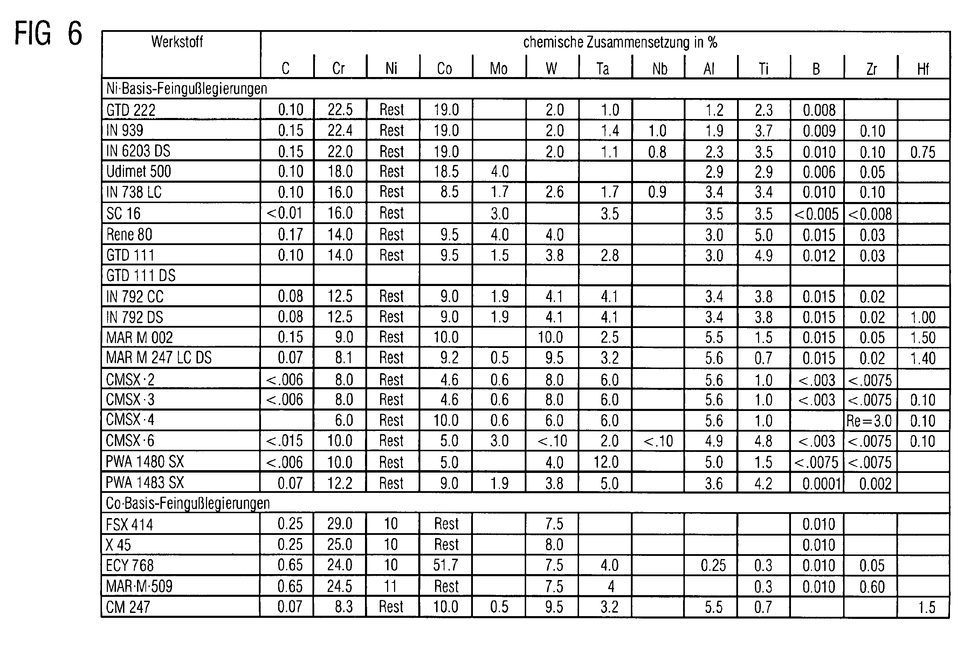

Der metallische Draht 1 weist einen Kern 4 und eine Hülle 7 auf. Insbesondere besteht der Draht 1 aus einem Kern 4 und einer Hülle 7.
Die Hülle 7 weist ein metallisches Material auf, das sich vorzugsweise ab 900°C bis 1000°C plastisch verformen lässt, also das sich als Massivmaterial durch Ziehen oder Heißumformung (Hot forming) bearbeiten lässt. Insbesondere besteht die Hülle 7 aus einem metallischen Material. Als Material der Hülle 7 wird ein Material verwendet, das keinen oder einen geringen Anteil der γ'-Phase aufweist, wie z.B. Inconel 625 oder Nickel, NiCr 80/20, IN 718 sowie Aluminium (A1), eine Aluminiumlegierung, Kobalt (Co) oder eine Kobaltlegierung. Als Verwendung des Drahts 1 beim Schweißen, insbesondere von Superlegierungen gemäß Figur 6, besteht der metallische Draht 1 aus einer Hülle 7, die insbesondere aus Nickel oder einer nicht γ'-gehärteten Nickellegierung besteht.

Das Material des Kerns 4 weist vorzugsweise ein Metall auf. Insbesondere besteht das Material für den Kern 4 aus einem Metall oder einer Metalllegierung.
Der Kern 4 wird vorzugsweise gebildet durch eine γ'-gehärtete Superlegierung gemäß Figur 6, die insbesondere bei Raumtemperatur eine geringe Duktilität aufweist.
Vorzugsweise wird für das Material des Kerns 4 das Material des Substrats des Bauteils 1, 120, 130, 155 ausgewählt, das geschweißt werden soll (Fig. 2).
Wenn also ein Material aus Rene80 geschweißt werden soll, so wird eine Hülle 7 vorzugsweise aus Nickel verwendet, in dem ein Pulver aus Rene80 eingefüllt ist.

Das Material des Kerns 4 liegt vorzugsweise in Pulverform vor und besteht vorzugsweise aus einem Pulver.

Jede als Pulver erhältliche γ'-gehärtete Nickelbasislegierung ist vorzugsweise in den hohlen Draht 1 einfüllbar.
Das Material für die Hülle 7, insbesondere Nickel, als auch das Pulver der γ'-gehärteten oder spröden Superlegierung sind kommerziell erhältlich.

Ein so hergestellter Draht 1 lässt sich leicht verformen, da die Pulverkörner sich aneinander vorbeischieben können und durch die plastisch verformbare Hülle 7 zusammengehalten werden, so dass durch eine Krafteinwirkung (+F) der Querschnitt des metallischen Drahts verkleinert werden kann. Dies ist in Figur 1 von links nach rechts dargestellt. Ebenso weist dieser Draht 1 eine höhere Flexibilität auf als ein aus einem massiven Block herausgeschnittenen Stab, so dass ebenfalls jeder gewünschte Querschnitt eingestellt und hergestellt werden kann.

Der Draht 1 kann auch auf andere Art und Weise hergestellt werden. So kann beispielsweise aus einer Schmelze, die ein Material aufweist, das gemäß der vorliegenden Anmeldung für die Hülle 7 verwendet wird, ein Draht 1 hergestellt werden, wobei Pulverteilchen in der Schmelze vorhanden sind, dessen Material dem Material des Kerns 4 gemäß der vorliegenden Anmeldung entspricht. Aus dieser Schmelze mit den in der Schmelze dispergierten Teilchen (für den Kern 4) kann nach dem Stand der Technik ein Draht 1 gezogen werden oder eine sonstige beliebige Darstellungsform erreicht werden. Durch diese Art der Herstellung werden die spröden Teilchen immer von einem plastisch verformbaren Material umhüllt und ein so hergestellter Draht lässt sich mechanisch leicht verarbeiten und, wie in Figur 1 dargestellt, in seiner Querschnittsform verringern oder verändern.

Die Hülle 7 weist einen Durchmesser, insbesondere Innendurchmesser, von einigen Millimetern auf und ist mit einem Pulver gefüllt, das vorzugsweise eine Körnung zwischen -120/+325mesh aufweist.
Vorzugsweise beträgt der Durchmesser 1mm bis 3mm, besonders vorzugsweise beträgt der Durchmesser 1mm.

Der Draht 1 kann beim manuellen oder automatischen WIG-Schweißen verwendet werden. Auch eine Anwendung beim Plasma- oder Laserschweißen ist möglich.

Figur 2 zeigt ein Bauteil 10, das eine Stelle 19 aufweist, die gefüllt werden muss.
Die Stelle 19, beispielsweise ein Riss, die ausgearbeitet wurde, muss wieder aufgefüllt werden. Dabei wird ein Draht 1 verwendet, der ausgehend von einem Draht gemäß Figur 1 entsprechend auf die entsprechende Dicke hin bearbeitet und gekürzt wurde. Auch das Schneiden des Drahts 1 gemäß Figur 1 lässt sich leicht durchführen, da die Hülle (bspw. Nickel) und das Pulver sich leicht durchschneiden lassen. Dies wäre bei einem aus einem sehr massiven Block herausgeschnittenen Draht nicht der Fall.

Mittels eines Schweißgeräts 13, das vorzugsweise ein Plasma 16 oder Laserstrahlen 16 erzeugt, wird in der Vertiefung 19 der Draht mit dem Bauteil verbunden.

Danach erfolgt insbesondere eine Wärmebehandlung des Bauteils (1, 120, 130, 155), insbesondere im geschweißten Bereich, um das Material der Hülle 7 diffundieren zu lassen.
Auch ein großflächiges Auftragsschweißen kann mit dem Draht 1 durchgeführt werden oder einer Platte aus dem Material der Hülle 7 und einer Innenfüllung mit dem Material des Kerns 4.

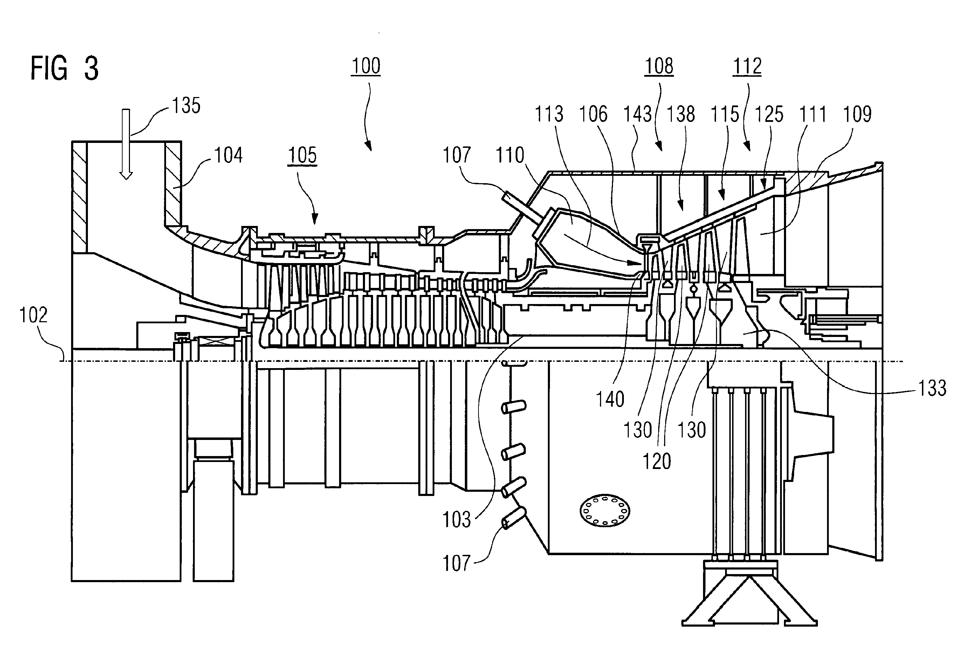

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

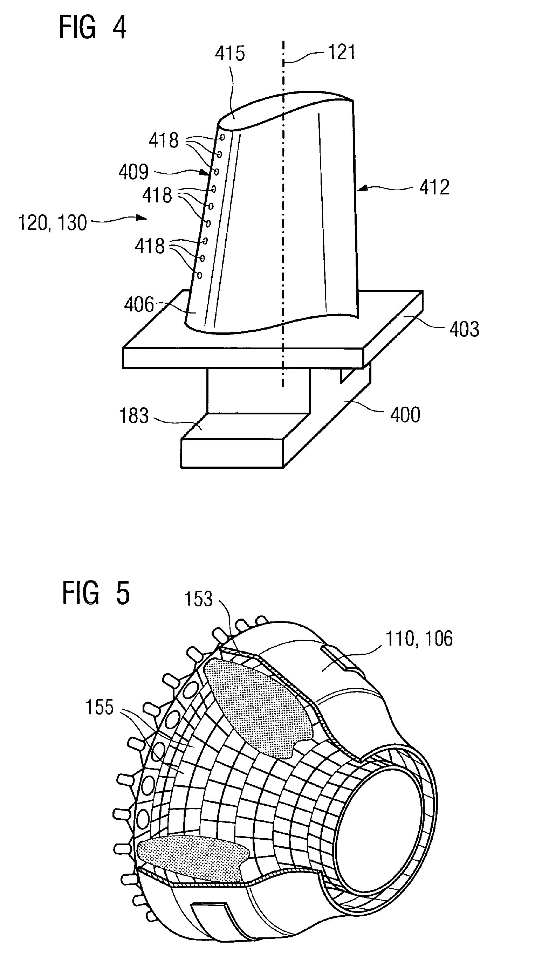

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 mit dem erfindungsgemäßen Draht repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Draht (1)
mit einer Hülle (7),
die (7) ein metallisches, plastisch verformbares Material aufweist,
insbesondere aus einem metallischen, plastisch verformbaren Material besteht, und
mit einem Kern (4),
der in der Hülle (7) angeordnet ist,
der (4) ein metallisches Material aufweist,
insbesondere aus einem metallischen Material besteht,
das sich in seiner Zusammensetzung von dem Material der Hülle (7) unterscheidet.

2. Draht (1) nach Anspruch 1,
bei dem das metallische Material für den Kern (4) in Pulverform in der Hülle (7) vorhanden ist.

3. Draht (1) nach Anspruch 1 oder 2,
bei dem das Material für den Kern (4) spröde ist.

4. Draht (1) nach Anspruch 1 oder 2,
bei dem der Kern (4) ein plastisch verformbares Material aufweist,
insbesondere aus einem plastisch verformbaren Material besteht.

5. Draht (1) nach Anspruch 1, 2, 3 oder 4,
bei dem das Material des Kerns (4) eine Kobalt- oder eine γ'-gehärtete Nickellegierung aufweist,
insbesondere aus einer Kobalt- oder γ'-gehärteten Nickellegierung besteht.

6. Draht (1) nach Anspruch 1 oder 5,
bei dem das Material des Kerns (4) eine γ'-gehärtete Superlegierung aufweist,
insbesondere aus einer γ'-gehärteten Superlegierung besteht.

7. Draht (1) nach Anspruch 1, 5 oder 6,
bei dem das Material des Kerns (4) Rene80 aufweist, insbesondere aus Rene80 besteht.

8. Draht (1) nach Anspruch 1 oder 2,
bei dem die Hülle (7) eine nicht γ'-gehärtete Nickel- oder Kobaltlegierung aufweist,
insbesondere aus einer nicht γ'-gehärteten Nickel- oder Kobaltlegierung besteht.

9. Draht (1) nach Anspruch 1, 2 oder 8,
bei dem das Material der Hülle (7) Inconel 625 aufweist, insbesondere aus Inconel 625 besteht.

10. Draht (1) nach Anspruch 1 oder 2,
bei dem das Material der Hülle (7) Nickel aufweist, insbesondere aus Nickel besteht.

11. Draht (1) nach Anspruch 1, 2 oder 8,
bei dem das Material der Hülle (7) NiCr80/20 aufweist, insbesondere aus NiCr80/20 besteht.

12. Draht (1) nach Anspruch 1, 2 oder 8,
bei dem das Material der Hülle (7) IN718 aufweist, insbesondere aus IN718 besteht.

13. Draht (1) nach Anspruch 1 oder 2,
bei dem das Material der Hülle (7) Aluminium aufweist, insbesondere aus Aluminium besteht.

14. Draht (1) nach Anspruch 1 oder 2,
bei dem das Material der Hülle (7) eine Aluminiumlegierung aufweist,
insbesondere aus einer Aluminiumlegierung besteht.

15. Draht (1) nach Anspruch 1 oder 2,
bei dem das Material der Hülle (7) Kobalt aufweist, insbesondere aus Kobalt besteht.

16. Draht (1) nach Anspruch 1,
der einen Durchmesser von einigen Millimetern, insbesondere einen Durchmesser von 1mm aufweist.

17. Draht (1) nach Anspruch 2 oder 16,
bei dem das Pulver eine Korngröße von 120mesh - 325mesh aufweist.

18. Verwendung des Drahts (1) nach einem oder mehreren der vorherigen Ansprüche 1 bis 17 als Schweißdraht.

19. Verfahren zum Schweißen eines Bauteils (1, 120, 130, 155),
bei dem ein Draht (1) gemäß einem oder mehreren der vorherigen Ansprüche 1 bis 17 auf ein Bauteil (10) aufgeschweißt wird.

20. Verfahren nach Anspruch 19,
bei dem der Draht (1) vor dem Schweißen gezogen wird.

21. Verfahren nach Anspruch 19,
bei dem das Bauteil (1, 120, 130, 155),
insbesondere um die geschweißte Stelle,
vor dem Schweißen wärmebehandelt wird.

22. Verfahren nach Anspruch 19, 20 oder 21,
bei dem das Bauteil (1, 120, 130, 155) aus einer nickelbasierten Superlegierung besteht.

23. Verfahren nach Anspruch 19 oder 22,
bei dem für das Material des Kerns (7) das gleiche Material wie beim zu schweißenden Bauteil (1, 120, 130, 155) verwendet wird.
